# EUROPÄISCHE PATENTSCHRIFT

(11) **EP 2 566 745 B1**
(45) Veröffentlichungstag und Bekanntmachung des Hinweises auf die Patenterteilung: **31.12.2014**
(21) Anmeldenummer: 11717995.2
(22) Anmeldetag: 26.04.2011
(51) Int. Cl.: B62D 15/02, B60W 30/06, B60W 10/08, B60W 10/20

(54) **VERFAHREN ZUM EINPARKEN EINES KRAFTFAHRZEUGES SOWIE EINPARKSYSTEM**
METHOD FOR PARKING A MOTOR VEHICLE AND PARKING SYSTEM
PROCÉDÉ DE MISE EN STATIONNEMENT D'UN VÉHICULE AUTOMOBILE ET SYSTÈME DE MISE EN STATIONNEMENT

(30) Priorität: 07.05.2010 DE 102010028714
(43) Veröffentlichungstag der Anmeldung: 13.03.2013
(73) Patentinhaber: Robert Bosch GmbH, 70442 Stuttgart (DE)
(72) Erfinder: STAACK, Jochen, 70178 Stuttgart (DE); SCHNEIDER, Marcus, 71642 Ludwigsburg (DE)
(86) Internationale Anmeldenummer: PCT/EP2011/056520
(87) Internationale Veröffentlichungsnummer: WO 2011/138187

(56) Entgegenhaltungen:
- DE-A1- 19 817 142

## Beschreibung

Die Erfindung betrifft ein Verfahren zum Einparken eines Kraftfahrzeuges, das einen Radantrieb zum Antrieb von Rädern des Kraftfahrzeuges und einen Lenkantrieb zum Verändern des Lenkwinkels der Räder aufweist. Ferner betrifft die Erfindung ein Einparksystem für ein Kraftfahrzeug.

Moderne Kraftfahrzeuge weisen elektronische Einparksysteme beziehungsweise Parkassistenzsysteme auf, die den Fahrer des Kraftfahrzeuges beim Einparken des Kraftfahrzeuges unterstützen. Dabei können die Einparksysteme den Einparkvorgang vollständig oder teilweise übernehmen. Die Kraftfahrzeuge weisen eine entsprechende Sensorik auf, die zur Erfassung der Parklücke und der Hindernisse dient. Beispielswiese sind in den Stoßfängern eines Kraftfahrzeuges mehrere Sender-Empfänger-Einheiten integriert, über die der Abstand zu einem Hindernis erfasst wird. Derartige Sender-Empfänger-Einheiten können beispielsweise Ultraschall- oder Laserimpulse aussenden und deren an den entsprechenden Hindernissen reflektiertes Echo empfangen. Das Einparksystem kann aus der Zeitdifferenz zwischen dem ausgesendeten Signal und dem empfangenen Signal den Abstand des Kraftfahrzeuges zu dem Hindernis feststellen.

Derartige Einparksysteme müssen ferner in der Lage sein, eine geeignete kollisionsfreie Bahn, die sogenannte Trajektorie, zu berechnen, die das Kraftfahrzeug unter Berücksichtigung aller kinematischen Beschränkungen in die gewünschte Parklücke überführt. Ziel eines Einparksystems ist es, eine Trajektorie für das Kraftfahrzeug zu finden, die das Kraftfahrzeug sicher von einem Startpunkt zu einem gewünschten Zielpunkt in der Parklücke überführt. Dabei darf beim Abfahren der Trajektorie kein Hindernis im Weg stehen, so dass keine Kollision auftritt. Das Kraftfahrzeug fährt die berechnete Trajektorie aus Sicherheitsgründen mit einer begrenzten Geschwindigkeit ab.

Ein derartiges Einparksystem beziehungsweise Fahrzeuglenksystem ist beispielsweise aus der DE 100 26 237 A1 bekannt. Das Fahrzeuglenksystem ermöglicht, dass ein Fahrzeug zunächst von einer Parkstartposition vorwärts zu einer Bewegungsrichtungsänderungsposition bewegt wird, wobei die Vorderräder automatisch, basierend auf einer Vorwärtsbewegungsortskurve, die zuvor gespeichert wurde, gelenkt werden. In der Bewegungsrichtungsänderungsposition kann das Fahrzeug angehalten werden. Lediglich durch Beibehalten eines bestimmten Lenkwinkels an der Bewegungsrichtungsänderungsposition kann durch einen Fahrer während einer nachfolgenden Rückwärtsbewegung des Fahrzeugs von der Bewegungsrichtungsänderungsposition zu einer Parkendposition das Fahrzeug zu der Parkendposition gefahren werden. Wenn es einen kleinen Fehler bei der Ausrichtung des Fahrzeugs an der Bewegungsrichtungsänderungsposition gibt, kann der Fahrer das Lenkrad des Fahrzeuges betätigen, um die Bewegungsrichtung während der Rückwärtsbewegung des Fahrzeugs fein zu regulieren.

Ein Verfahren zum Einparken sowie ein Einparksystem nach dem Oberbegriff der unabhängigen Ansprüche 1 und 7 ist aus der DE 198 17 142 A1 bekannt.

Nachteilig bei diesem Einparksystem und den sonstigen bekannten Einparksystemen ist, dass bei Abfahren der Trajektorie die Räder des Kraftfahrzeuges auch während des Stillstandes des Kraftfahrzeuges gedreht werden, das heißt der Lenkwinkel der Vorderachse geändert wird, wenn das Kraftfahrzeug steht. Hierdurch kommt es zu einer nachteiligen erhöhten Abnutzung der Vorderreifen des Kraftfahrzeuges.

Daher ist es die Aufgabe der Erfindung ein Verfahren zum Einparken eines Kraftfahrzeuges sowie ein Einparksystem für ein Kraftfahrzeug zu schaffen, die ermöglichen, dass die lenkbaren Reifen des Kraftfahrzeuges während des gesamten Einparkvorgangs geschont werden.

Diese Aufgabe wird erfindungsgemäß durch Verfahren zum Einparken eines Kraftfahrzeuges mit den Merkmalen gemäß dem unabhängigen Patentanspruch 1 sowie durch ein Einparksystem für ein Kraftfahrzeug mit angetriebenen Rädern mit den Merkmalen gemäß dem unabhängigen Patentanspruch 7 gelöst. Weitere Merkmale und Details der Erfindung ergeben sich aus den Unteransprüchen, der Beschreibung und den Zeichnungen. Merkmale und Details die im Zusammenhang mit dem Verfahren beschrieben sind gelten dabei selbstverständlich auch im Zusammenhang mit dem Einparksystem und umgekehrt, so dass bezüglich der Offenbarung zu den einzelnen Erfindungsaspekten stets wechselseitig Bezug genommen wird.

Gemäß dem ersten Aspekt der Erfindung wird die Aufgabe durch ein Verfahren zum Einparken eines Kraftfahrzeuges, das einen Radantrieb zum Antrieb von Rädern des Kraftfahrzeuges und einen Lenkantrieb zum Verändern des Lenkwinkels der Räder aufweist, gelöst, wobei das Verfahren durch folgende Verfahrensschritte gekennzeichnet ist:
a) ein Parklückenvermessungssystem des Kraftfahrzeuges vermisst eine Parklücke,
b) ein Steuergerät des Kraftfahrzeuges berechnet auf Basis der Messdaten des Parklückenvermessungssystems eine Trajektorie,
c) das Steuergerät sendet Steuersignale an den Radantrieb und an den Lenkantrieb, wodurch das Kraftfahrzeug zum selbsttätigen Abfahren der Trajektorie veranlasst wird, wobei das Steuergerät den Radantrieb und den Lenkantrieb derart ansteuert, dass während einer Veränderung des Lenkwinkels der Räder durch den Lenkantrieb automatisch die Räder durch den Radantrieb angetrieben werden.

Ein derartiges Verfahren zum Einparken eines Kraftfahrzeuges ermöglicht ein reifenschonendes Umlenken der Räder des Kraftfahrzeuges während des Abfahrens der berechneten Trajektorie. Ferner können durch das Verfahren die Trajektorie kurz gehalten werden und die Zugwechsel, das heißt die Fahrrichtungswechsel, und die damit verbundenen Schaltvorgänge relativ gering gehalten werden. Als Trajektorie wird im Sinne der Erfindung die gesamte Bahn betrachtet, die das Kraftfahrzeug abzufahren hat, um von der Startposition in die gewünschte Endposition in der Parklücke zu gelangen.

In einem ersten Schritt wird eine anvisierte Parklücke durch ein Parklückenvermessungssystem des Kraftfahrzeuges vermessen. Das Parklückenvermessungssystem des Kraftfahrzeuges weist hierzu eine geeignete Sensorik auf. Insbesondere messen mehrere Sender-Empfänger-Einheiten, das heißt Sensoren, den Abstand des Fahrzeuges zu möglichen Hindernissen. Die Sender-Empfänger-Einheiten sind vorzugsweise in den Stoßfängern des Kraftfahrzeuges angeordnet. Vorzugsweise senden die Sender-Empfänger-Einheiten Ultraschall- oder Laserimpulse beziehungsweise -signale aus und empfangen das an den entsprechenden Hindernissen reflektierte Echo der Impulse beziehungsweise Signale. Alternativ oder zusätzlich kann das Parklückenvermessungssystem wenigstens ein Kamerasystem zur optischen Ausmessung der Parklücke beziehungsweise der Hindernisse aufweisen. Ebenso kann das Parklückenvermessungssystem beziehungsweise können Sender-Empfänger-Einheiten des Parklückenvermessungssystems Radarwellen, das heißt elektromagentische Wellen, zum Vermessen der Parklücke aussenden und empfangen.

In einem zweiten Verfahrensschritt berechnet ein Steuergerät des Kraftfahrzeuges auf der Basis der Messdaten des Parklückenvermessungssystems eine Trajektorie. Dabei berechnet das Steuergerät, insbesondere eine in dem Steuergerät vorgesehene Prozessoreinheit, aus der Zeitdifferenz zwischen den ausgesendeten Signalen und dem empfangenen Signal den Abstand des Kraftfahrzeuges zu dem wenigstens einen Hindernis.

Anschließend sendet das Steuergerät Steuersignale an den Radantrieb und an den Lenkantrieb des Kraftfahrzeuges, wodurch das Kraftfahrzeug zum selbsttätigen Abfahren der Trajektorie veranlasst wird. Dabei steuert das Steuergerät den Radantrieb, der vorzugsweise als elektrischer Radantrieb ausgebildet ist, und den Lenkantrieb, der vorzugsweise als elektrischer Lenkantrieb ausgebildet ist, derart, dass gleichzeitig mit einer Veränderung des Lenkwinkels der Räder durch den Lenkantrieb automatisch die Räder durch den Radantrieb angetrieben werden. Dies bedeutet, dass nur dann eine Veränderung des Lenkwinkels der Räder, was im Weiteren auch als Umlenken bezeichnet wird, wenn die Räder durch den Radantrieb angetrieben werden. Bei dem Verfahren wird verhindert, dass ein Umlenken der Räder im Stillstand des Kraftfahrzeuges erfolgt. Das Steuergerät sendet nur dann Steuersignale an den Lenkantrieb zum Verändern des Lenkwinkels der lenkbaren Räder des Kraftfahrzeuges, wenn das Kraftfahrzeug in Bewegung ist, dass heißt die Räder des Kraftfahrzeuges sich drehen. Dadurch wird der Abrieb der Räder, das heißt der Gummimischung der Räder, geringer gehalten, als bei einer Drehung der Räder im Stillstand des Kraftfahrzeuges. Befindet sich das Kraftfahrzeug während des Abfahrens der Trajektorie im Stillstand, sendet das Steuergerät Steuersignale sowohl an den Radantrieb, als auch an den Lenkantrieb des Kraftfahrzeuges, so dass gleichzeitig mit Beginn des Umlenkvorgangs der Räder des Kraftfahrzeuges die Räder in Bewegung gesetzt werden.

Der Lenkwinkel, auch als Vorspurwinkel bezeichnet, ist der Winkel den die lenkbaren Räder bei einem Links- oder Rechtseinschlag zu der Kraftfahrzeuglängsachse einnehmen.

Dadurch, dass bei dem Verfahren zum Einparken des Kraftfahrzeuges der Lenkwinkel der lenkbaren Räder nur dann verändert wird, wenn die Räder angetrieben werden, das heißt sich drehen, werden die Räder keine allzu großen Reibbelastung ausgesetzt, wodurch die Haltbarkeit der Räder verlängert wird.

Das Verfahren erleichtert die Längsführung des Kraftfahrzeuges.

Gemäß einer bevorzugten Weiterentwicklung der Erfindung kann bei dem Verfahren vorgesehen sein, dass während einer Veränderung des Lenkwinkels der Räder durch den Lenkantrieb die Räder durch den Radantrieb mit einer bestimmten Geschwindigkeit angetrieben werden. So kann bei jedem Umlenkvorgang die Geschwindigkeit der Reifenumdrehungen durch das Steuergerät vorgegeben werden. Das Kraftfahrzeug geht, sobald ein Lenkvorgang erfolgt über in eine sogenannte gewünschte Kriechfahrt mit vorgegebener Geschwindigkeit. Hierdurch ist sichergestellt, dass die Reifen bei einem Rechts- oder Linkseinschlag mit einer bestimmten Geschwindigkeit gedreht werden. Dies erleichtert die Berechnung beziehungsweise das Abfahren der Trajektorie. Insbesondere ist kein Eingreifen des Fahrers erforderlich. Das Steuergerät sendet je nach Anforderung für das Abfahren der Trajektorie entsprechende Steuersignale an den Lenkantrieb und an den Radantrieb, so dass das Fahrzeug selbsttätig, das heißt durch eine oder mehrere Vorwärts- oder Rückwärtsbewegungen sowie entsprechende Veränderungen des Lenkwinkels, in die ausgemessene Parklücke einfahren kann. Das Kraftfahrzeug wird dabei durch das Steuergerät längsgeführt.

Ein Vorteil des Verfahrens liegt insbesondere darin, dass beim Übergang von einer Rückwärtsbewegung zu einer Vorwärtsbewegung des Kraftfahrzeuges das Kraftfahrzeug genau ausgerichtet längsgeführt wird, so dass die berechnete Trajektorie optimal abgefahren werden kann. Durch die Vorgabe der Geschwindigkeit des Kraftfahrzeuges durch gezielte Ansteuerung des Radantriebes und durch die Vorgabe der Veränderung des Lenkwinkels durch gezielte Ansteuerung des Lenkantriebes kann die Trajektorie exakt eingehalten werden, so dass wenig Zugwechsel, das heißt wenige Fahrrichtungswechsel und damit verbundene Schaltvorgänge, zum Einparken erforderlich sind. Durch das Verfahren verringert sich der Effekt der Zugerhöhung durch Anfahren während des Lenkens auf ein Mindestmaß. Die Reifen werden weniger belastet und der Fahrer fühlt sich beim Erfahren des Umlenkens wohler, als wenn die Räder im Stillstand gedreht werden.

Nach erfolgter Freigabe durch den Fahrer wird das Kraftfahrzeug gemäß dem Verfahren automatisch in die gewünschte Parklücke gelenkt. Dies kann dadurch, dass die angetriebenen Räder bei einem Lenkvorgang immer in Bewegung sind, recht einfach und genau erfolgen.

Gemäß einer weiteren bevorzugten Weiterentwicklung der Erfindung kann bei dem Verfahren vorgesehen sein, dass die Räder während einer Veränderung des Lenkwinkels der Räder in Abhängigkeit der Geschwindigkeit der Veränderung des Lenkwinkels der Räder unterschiedlich schnell angetrieben werden, wobei bei einer hohen Geschwindigkeit der Veränderung des Lenkwinkels die Räder schneller angetrieben werden, als bei einer langsamen Geschwindigkeit. So kann bei einem erforderlichen starken Reifeneinschlag vorgesehen sein, dass die Reifen schneller gedreht werden, also die Fahrgeschwindigkeit des Kraftfahrzeuges erhöht wird. Hierdurch kann der Abrieb der Reifen gering gehalten werden. Beispielsweise kann die Drehgeschwindigkeit der Reifen proportional zu der Geschwindigkeit der Veränderung des Lenkwinkels der Räder angepasst werden.

Wie bereits zuvor ausgeführt erfolgen der Radantrieb vorteilhafterweise durch einen elektrischen Radantrieb und der Lenkantrieb vorteilhafterweise durch einen elektrischen Radantrieb. Das Verfahren lässt sich aber auch durch ein mit einem normalen Verbrennungsmotor angetriebenes Kraftfahrzeug durchführen. Dies erfolgt unter anderem durch einen entsprechenden Eingriff des Einparksystems in die Bremse und die Motorsteuerung des Kraftfahrzeuges. Denkbar ist auch eine Steuerung der Bremse und der Motorsteuerung durch ein drittes Steuergerät, dass die Wegstreckenanweisung des Einparksystems entsprechend für Motor und Bremse umsetzt.

Durch Aussendung von unterschiedlichen Steuersignalen an den insbesondere elektrisch ausgebildeten Radantrieb kann das Kraftfahrzeug wahlweise vorwärts und rückwärts bewegt werden. Ein derartig ausgebildetes Steuergerät ermöglicht ein einfaches und schnelles, insbesondere automatisches, Anfahren der berechneten Trajektorie.

Bevorzugt ist ferner bei dem Verfahren zum Einparken eines Kraftfahrzeuges, dass der Start des Antriebs der Räder des Kraftfahrzeugs durch ein Lösen einer Bremse des Kraftfahrzeugs und/oder durch die Betätigung des Gaspedals des Kraftfahrzeugs erfolgt. Nach dem Start des Kraftfahrzeugs fährt das längsgeführte Einparksystem das Kraftfahrzeug selbsttätig auf kürzestem Weg in die gewünschte Parklücke. Hierbei werden die Reifen, das heißt die gelenkten Reifen, maximal geschont.

Gemäß einem zweiten Aspekt der Erfindung wird die Aufgabe durch ein Einparksystem für ein Kraftfahrzeug mit angetriebenen Rädern, aufweisend ein Parklückenvermessungssystem, ein Steuergerät zur Berechnung einer Trajektorie auf Basis von ermittelten Daten des Parklückenvermessungssystems, einen Radantrieb, der eine Vorwärts- und Rückwärtsbewegung der angetriebenen Räder ermöglicht, sowie einen Lenkantrieb zur Einstellung des Lenkwinkels der angetriebenen Räder, wobei das Steuergerät zur gleichzeitigen Ansteuerung des Radantriebs und des Lenkantriebs ausgebildet ist, so dass ein Lenkeinschlag der angetriebenen Räder immer bei einer Drehbewegung der angetriebenen Räder erfolgt, gelöst. Der Radantrieb ist vorzugsweise ein elektrischer Radantrieb, der Lenkantrieb ist vorzugsweise ein elektrischer Lenkantrieb.

Ein derartiges längsgeführtes Einparksystem zum Einparken eines Kraftfahrzeuges ermöglicht ein reifenschonendes Umlenken der Räder des Kraftfahrzeuges während des Abfahrens der berechneten Trajektorie. Ferner können durch das Einparksystem die Trajektorie kurz gehalten werden und Fahrrichtungswechsel, und die damit verbundenen Schaltvorgänge, auf einem Minimum gehalten werden.

Das Steuergerät weist vorteilhafterweise einen Prozessor zur Berechnung der Trajektorie auf Basis der ermittelten Daten des Parklückenvermessungssystems auf. Das Parklückenvermessungssystem weist vorzugsweise eine Sensorik zur Feststellung von Hindernissen auf. Die Sensorik weist vorteilhafterweise mehrere Sender-Empfänger-Einheiten, das heißt Sensoren, auf, die den Abstand des Kraftfahrzeuges zu möglichen Hindernissen ermittelt. Dabei können die Abmaße der Parklücke ermittelt werden. Gleichzeitig kann die Sensorik während des gesamten automatisierten Einparkvorgangs den sich ständig verändernden Abstand des Kraftfahrzeuges zu den Hindernissen ermitteln. Die Sender-Empfänger-Einheiten sind vorzugsweise in den Stoßfängern des Kraftfahrzeuges angeordnet. Vorzugsweise sind die Sender-Empfänger-Einheiten zur Aussendung und zum Empfang von Ultraschall- oder Laserimpulsen beziehungsweise -signalen, von Lichtwellen oder elektromagnetischen Wellen ausgebildet. Das Steuergerät ist vorzugsweise derart ausgebildet, dass es gleichzeitig den elektrischen Radantrieb und den elektrischen Lenkantrieb ansteuern kann, so dass ein Lenkeinschlag der angetriebenen Räder immer bei einer Drehbewegung der angetriebenen Räder erfolgt.

Das Einparksystem weist vorzugsweise Mittel zur Durchführung des Verfahrens zum Einparken eines Kraftfahrzeuges gemäß dem ersten Aspekt der Erfindung auf. Das Einparksystem ermöglicht ein automatisches Einparken des Kraftfahrzeuges, das heißt eine Quer- und Längsführung des Kraftfahrzeuges.

Die Erfindung und ihre Weiterbildungen sowie deren Vorteile werden nachfolgend anhand von Zeichnungen näher erläutert. Es zeigen jeweils schematisch:
- Figur 1: ein Kraftfahrzeug und den Lenkwinkel des Kraftfahrzeuges,
- Figur 2: die Trajektorie eines Kraftfahrzeuges, bei dem der Fahrer in die Umlenkung eingreift,
- Figur 3: die Trajektorie eines Kraftfahrzeuges, bei dem das Kraftfahrzeug gemäß dem erfindungsgemäßen Verfahren in eine Parklücke eingeparkt wird.

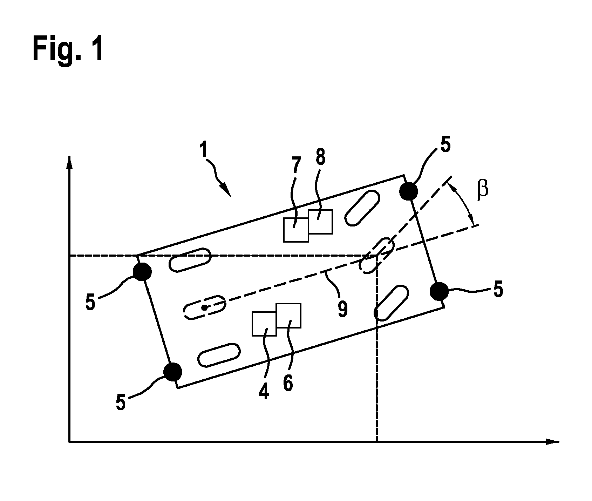

Elemente mit gleicher Funktion und Wirkungsweise sind in den Figuren 1 bis 3 jeweils mit denselben Bezugszeichen versehen.

In Fig. 1 ist ein Kraftfahrzeug 1 dargestellt, bei dem die angetriebenen und lenkbaren Räder 2 schräg gestellt sind. Das Kraftfahrzeug 1 weist antreibbare Räder 2 auf. Ferner weist das Kraftfahrzeug 1 ein Einparksystem, aufweisend ein Parklückenvermessungssystem 4, ein Steuergerät 6 zur Berechnung einer Trajektorie 3 auf Basis von ermittelten Daten des Parklückenvermessungssystems 4, einen Radantrieb 7, insbesondere einen elektrischen Radantrieb, der eine Vorwärts- und Rückwärtsbewegung der angetriebenen Räder 2 ermöglicht, sowie einen Lenkantrieb 8, insbesondere einen elektrischen Lenkantrieb, zur Einstellung des Lenkwinkels β der angetriebenen Räder 2 auf. Das Steuergerät 6 des Einparksystems ist zur gleichzeitigen Ansteuerung des Radantriebs 7 und des Lenkantriebs 8 ausgebildet, so dass ein Lenkeinschlag der angetriebenen Räder 2 immer bei einer Drehbewegung der angetriebenen Räder 2 erfolgt. Der Lenkwinkel β der angetriebenen Räder 2 des Kraftfahrzeuges 1 ist der Winkel den die lenkbaren Räder 2 bei einem Links- oder Rechtseinschlag zu der Kraftfahrzeuglängsachse 9 einnehmen.

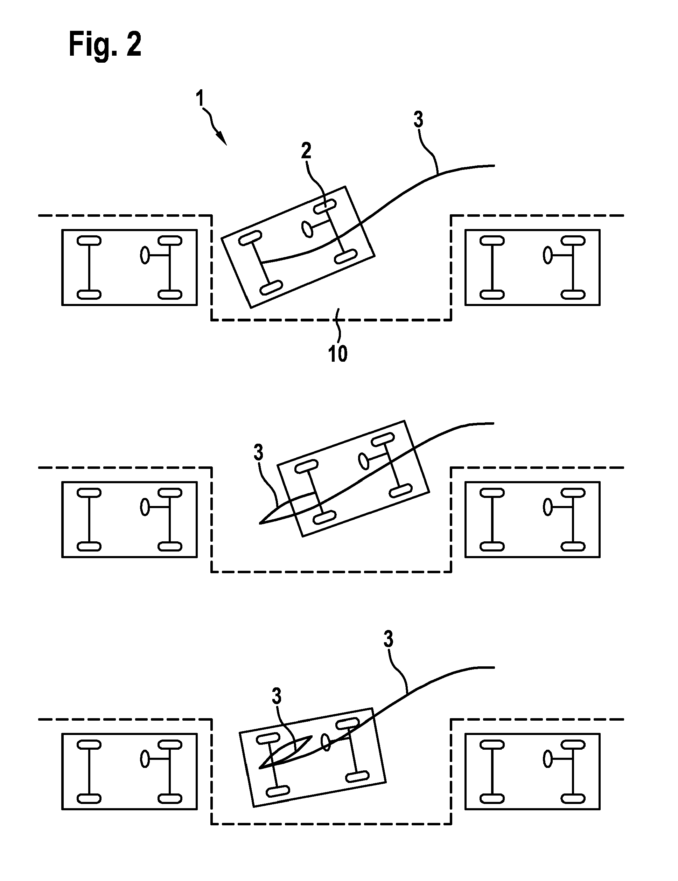

In der Fig. 2 ist die Trajektorie 3 eines Kraftfahrzeuges 1 gezeigt, bei dem der Fahrer in die Umlenkung eingreift. Das heißt, das Einparksystem des Kraftfahrzeuges 1 fährt das Kraftfahrzeug 1 zunächst rückwärts in die Parklücke 10 hinein. Beim Zugwechsel, das heißt der Änderung der Fahrrichtung des Kraftfahrzeuges 1 mit entsprechendem Gangwechsel, greift der Fahrer aktiv in das Fahrverhalten des Kraftfahrzeuges 1 ein, beispielsweise durch Gas geben oder durch Betätigung der Lenkung des Kraftfahrzeuges 1, so dass das Kraftfahrzeug 1 unkontrolliert in der Parklücke 10 bewegt wird und keine gute Parkendposition erreicht wird.

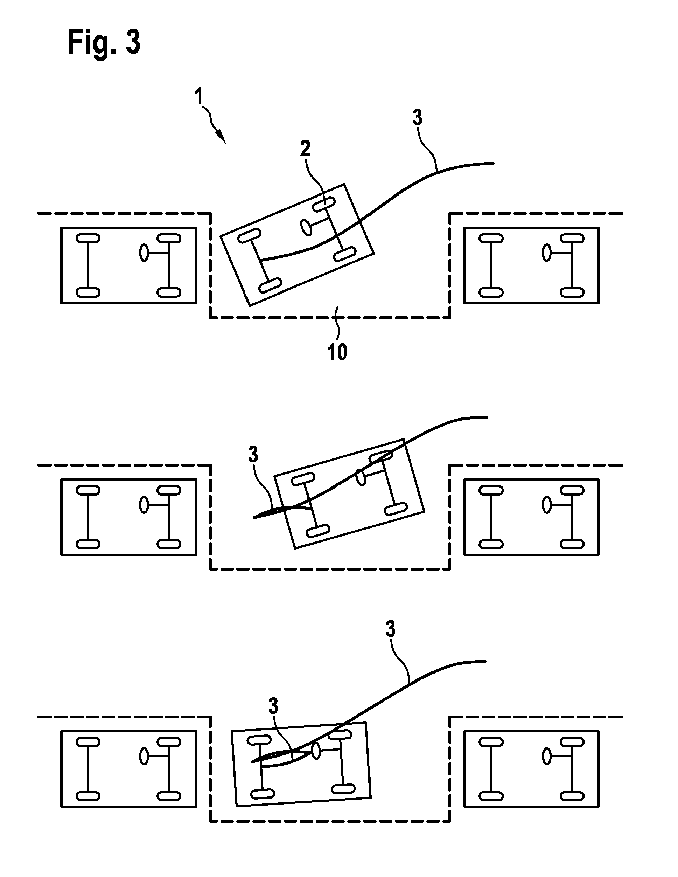

Fig. 3 zeigt schematisch die Trajektorie 3 eines Kraftfahrzeuges 1, bei dem das Kraftfahrzeug 1 gemäß dem erfindungsgemäßen Verfahren in eine Parklücke 10 eingeparkt wird. In einem ersten Schritt wird eine anvisierte Parklücke 10 durch ein Parklückenvermessungssystem 4 des Kraftfahrzeuges 1 vermessen. Das Parklückenvermessungssystem 4 des Kraftfahrzeuges 1 weist hierzu eine geeignete Sensorik 5, insbesondere mehrere Sender-Empfänger-Einheiten, die den Abstand des Kraftfahrzeuges 1 zu möglichen Hindernissen messen, auf. Die Sender-Empfänger-Einheiten 5 sind vorzugsweise in den Stoßfängern des Kraftfahrzeuges 1 angeordnet. Vorzugsweise senden die Sender-Empfänger-Einheiten 5 Ultraschall- oder Laserimpulse beziehungsweise -signale, Lichtwellen oder elektromagnetische Wellen aus und empfangen das an den entsprechenden Hindernissen reflektierte Echo der Impulse, Signale beziehungsweise Wellen. In einem zweiten Verfahrensschritt berechnet ein Steuergerät 6 des Kraftfahrzeuges 1 auf der Basis der Messdaten des Parklückenvermessungssystems 4 eine Trajektorie 3. Dabei berechnet das Steuergerät 6, insbesondere eine in dem Steuergerät 6 vorgesehene Prozessoreinheit, aus der Zeitdifferenz zwischen den ausgesendeten Signalen und dem empfangenen Signal den Abstand des Kraftfahrzeuges 1 zu dem wenigstens einen Hindernis. Anschließend sendet das Steuergerät 6 Steuersignale an den vorzugsweise elektrisch ausgebildeten Radantrieb 7 und an den vorzugsweise elektrisch ausgebildeten Lenkantrieb 8 des Kraftfahrzeuges 1, wodurch das Kraftfahrzeug 1 zum selbsttätigen Abfahren der Trajektorie 3 veranlasst wird. Dabei steuert das Steuergerät 6 den Radantrieb 7 und den Lenkantrieb 8 derart, dass gleichzeitig mit einer Veränderung des Lenkwinkels β der Räder 2 durch den Lenkantrieb 8 automatisch die Räder 2 durch den Radantrieb 7 angetrieben werden. Dies bedeutet, dass immer mit einer Veränderung des Lenkwinkels β der Räder 2, die Räder durch den Radantrieb 7 angetrieben werden. Bei dem Verfahren wird verhindert, dass ein Umlenken der Räder 2 im Stillstand des Kraftfahrzeuges 1 erfolgt. Im Vergleich zu Fig. 2 wird beim ersten Zugwechsel, das heißt der Änderung der Fahrrichtung des Kraftfahrzeuges 1 mit entsprechendem Gangwechsel, das Kraftfahrzeug 1 kontrolliert vorwärts bewegt. Das Steuergerät 6 des Einparksystems sorgt dafür, dass das Kraftfahrzeug 1 immerwährend einer Veränderung des Lenkwinkels β gleichzeitig bewegt wird. Insbesondere wird das Kraftfahrzeug 1 während einer Veränderung des Lenkwinkels β mit einer gleichbleibenden Geschwindigkeit bewegt. Hierdurch ist das Abfahren einer kurzen Trajektorie 3 mit wenigen Zugwechseln möglich, um automatisch durch das Einparksystem, das heißt quer- und längsgeführt, in die Parklücke 10 zu gelangen, wie in Fig. 3 dargestellt.

Das Steuergerät 6 sendet nur dann Steuersignale an den Lenkantrieb 8 zum verändern des Lenkwinkels β der lenkbaren Räder 2 des Kraftfahrzeuges 1, wenn das Kraftfahrzeug 1 in Bewegung ist, dass heißt die Räder 2 des Kraftfahrzeuges 1 sich drehen. Dadurch wird der Abrieb der Räder 2, das heißt der Gummimischung der Räder 2, geringer gehalten, als bei einer Drehung der Räder 2 im Stillstand des Kraftfahrzeuges 1. Ein derartiges Verfahren zum Einparken eines Kraftfahrzeuges 1 ermöglicht ein reifenschonendes Umlenken der Räder 2 des Kraftfahrzeuges 1 während des Abfahrens der berechneten Trajektorie 3.

## Patentansprüche

1. Verfahren zum Einparken eines Kraftfahrzeuges (1), das einen Radantrieb zu Antrieb von Rädern (2) des Kraftfahrzeuges (1) und einen Lenkantrieb zum Verändern des Lenkwinkels (β) der Räder (2) aufweist, aufweisend folgende Verfahrensschritte:
a) ein Parklückenvermessungssystem (4) des Kraftfahrzeuges (1) vermisst eine Parklücke (10),
b) ein Steuergerät (6) des Kraftfahrzeuges (1) berechnet auf Basis der Messdaten des Parklückenvermessungssystems (4) eine Trajektorie (3),
c) das Steuergerät (6) sendet Steuersignale an den Radantrieb (7) und an den Lenkantrieb (8), wodurch das Kraftfahrzeug (1) zum selbsttätigen Abfahren der Trajektorie (3) veranlasst wird, **dadurch gekennzeichnet, dass** das Steuergerät (6) den Radantrieb (7) und den Lenkantrieb (8) derart ansteuert, dass während einer Veränderung des Lenkwinkels (β) der Räder (2) durch den Lenkantrieb (8) automatisch die Räder (2) durch den Radantrieb (7) angetrieben werden.

2. Verfahren nach Anspruch 1, **dadurch gekennzeichnet, dass** während einer Veränderung des Lenkwinkels (β) der Räder (2) durch den Lenkantrieb (8) die Räder (2) durch den Radantrieb (7) mit einer bestimmten Geschwindigkeit angetrieben werden.

3. Verfahren nach Anspruch 1 oder 2, **dadurch gekennzeichnet, dass** die Räder (2) während einer Veränderung des Lenkwinkels (β) der Räder (2) in Abhängigkeit der Geschwindigkeit der Veränderung des Lenkwinkels (β) der Räder (2) unterschiedlich schnell angetrieben werden, wobei bei einer hohen Geschwindigkeit der Veränderung des Lenkwinkels (β) die Räder (2) schneller angetrieben werden, als bei einer langsamen Geschwindigkeit.

4. Verfahren nach wenigstens einem der vorhergehenden Ansprüche 1 bis 3, **dadurch gekennzeichnet, dass** der Radantrieb (7) durch einen elektrischen Radantrieb und der Lenkantrieb (8) durch einen elektrischen Radantrieb erfolgen.

5. Verfahren nach wenigstens einem der vorhergehenden Ansprüche 1 bis 4, **dadurch gekennzeichnet, dass** durch Aussendung von unterschiedlichen Steuersignalen an den elektrischen Radantrieb (7) das Kraftfahrzeug (1) vorwärts und rückwärts bewegbar ist.

6. Verfahren nach wenigstens einem der vorhergehenden Ansprüche 1 bis 5, **dadurch gekennzeichnet, dass** der Start des Antriebs der Räder (2) des Kraftfahrzeugs (1) durch ein Lösen einer Bremse des Kraftfahrzeugs (1) und/oder durch die Betätigung des Gaspedals des Kraftfahrzeugs (1) erfolgt.

7. Einparksystem für ein Kraftfahrzeug (1) mit angetriebenen Rädern (2), aufweisend ein Parklückenvermessungssystem (4, 5), ein Steuergerät (6) zur Berechnung einer Trajektorie (3) auf Basis von ermittelten Daten des Parklückenvermessungssystems (4), einen elektrischen Radantrieb (7), der eine Vorwärts- und Rückwärtsbewegung der angetriebenen Räder (2) ermöglicht, sowie einen elektrischen Lenkantrieb (8) zur Einstellung des Lenkwinkels (β) der angetriebenen Räder (2), **dadurch gekennzeichnet, dass** das Steuergerät (6) zur gleichzeitigen Ansteuerung des elektrischen Radantriebs (7) und des elektrischen Lenkantriebs (8) ausgebildet ist, so dass ein Lenkeinschlag der angetriebenen Räder (2) immer bei einer Drehbewegung der angetriebenen Räder (2) erfolgt.

8. Einparksystem nach Anspruch 7, **dadurch gekennzeichnet, dass** dieses Mittel zur Durchführung des Verfahren zum Einparken eines Kraftfahrzeuges (1) gemäß wenigstens einem der vorhergehenden Ansprüche 1 bis 6 aufweist.

9. Einparksystem nach Anspruch 7 oder 8, **dadurch gekennzeichnet, dass** das Parklückenvermessungssystem (4) eine Sensorik (5) zur Feststellung von Hindernissen aufweist.

## Claims

1. Method for parking a motor vehicle (1) which has a wheel drive for driving wheels (2) of the motor vehicle (1) and a steering drive for changing the steering angle (β) of the wheels (2), comprising the following method steps:
a) a parking space-measuring system (4) of the motor vehicle (1) measures a parking space (10),
b) a control device (6) of the motor vehicle (1) calculates a trajectory (3) on the basis of the measurement data of the parking space-measuring system (4),
c) the control device (6) transmits control signals to the wheel drive (7) and to the steering drive (8), as a result of which the motor vehicle (1) is made to automatically travel along the trajectory (3), **characterized in that** the control device (6) actuates the wheel drive (7) and the steering drive (8) in such a way that during the changing of the steering angle (β) of the wheels (2) by the steering drive (8) the wheels (2) are automatically driven by the wheel drive (7).

2. Method according to Claim 1, **characterized in that** during the changing of the steering angle (β) of the wheels (2) by the steering drive (8), the wheels (2) are driven by the wheel drive (7) with a specific speed.

3. Method according to Claim 1 or 2, **characterized in that** during the changing of the steering angle (β) of the wheels (2), the wheels (2) are driven with different speeds as a function of the speed of the changing of the steering angle (β) of the wheels (2), wherein in the case of a high speed of the changing of the steering angle (β) the wheels (2) are driven more quickly than in the case of a slow speed.

4. Method according to at least one of the preceding Claims 1 to 3, **characterized in that** the wheel drive (7) is provided by an electric wheel drive, and the steering drive (8) by an electric wheel drive.

5. Method according to at least one of the preceding Claims 1 to 4, **characterized in that** by emitting different control signals to the electric wheel drive (7) the motor vehicle (1) can be moved forwards and backwards.

6. Method according to at least one of the preceding Claims 1 to 5, **characterized in that** the starting of the drive of the wheels (2) of the motor vehicle (1) is carried out by releasing a brake of the motor vehicle (1) and/or by activating the accelerator pedal of the motor vehicle (1).

7. Parking system for a motor vehicle (1) with driven wheels (2), having a parking space-measuring system (4, 5), a control device (6) for calculating a trajectory (3) on the basis of determined data of the parking space-measuring system (4), an electric wheel drive (7), which permits forward and backward movement of the driven wheels (2), and an electric steering drive (8) for setting the steering angle (β) of the driven wheels (2), **characterized in that** the control device (6) is designed to actuate the electric wheel drive (7) and the electric steering drive (8) simultaneously, with the result that a steering deflection of the driven wheels (2) always occurs during a rotational movement of the driven wheels (2).

8. Parking system according to Claim 7, **characterized in that** the latter has means for carrying out the method for parking a motor vehicle (1) according to at least one of the preceding Claims 1 to 6.

9. Parking system according to Claim 7 or 8, **characterized in that** the parking space-measuring system (4) has a sensor system (5) for detecting obstacles.

## Revendications

1. Procédé de stationnement d'un véhicule automobile (1) comportant un entraînement de roue servant à entraîner les roues (2) du véhicule automobile (1) et un entraînement de direction permettant de modifier l'angle de direction (β) des roues (2) ;
comportant les étapes de procédé suivantes :
a) un système de mesure de place de stationnement (4) du véhicule automobile (1) mesure une place de stationnement (10) ;
b) un appareil de commande (6) du véhicule automobile (1) calcule une trajectoire (3) sur la base des données de mesure du système de mesure de place de stationnement (4) ;
c) l'appareil de commande (6) envoie des signaux de commande à l'entraînement de roue (7) et à l'entraînement de direction (8), provoquant le parcours automatique de la trajectoire (3) par le véhicule automobile (1) ;
**caractérisé en ce que** :
l'appareil de commande (6) commande l'entraînement de roue (7) et l'entraînement de direction (8) de telle sorte que pendant une modification de l'angle de direction (β) des roues (2) par l'entraînement de direction (8), les roues (2) sont automatiquement entraînées par l'entraînement de roue (7).

2. Procédé selon la revendication 1, **caractérisé en ce que** pendant une modification de l'angle de direction (β) des roues (2) par l'entraînement de direction (8), les roues (2) sont entraînées à une vitesse définie par l'entraînement de roue (7).

3. Procédé selon la revendication 1 ou 2, **caractérisé en ce que** les roues (2) sont rapidement entraînées de façon différente pendant une variation de l'angle de direction (β) des roues (2) en fonction de la vitesse de variation de l'angle de direction (β) des roues (2), les roues (2) étant entraînées plus rapidement en cas de vitesse de variation de l'angle de direction (β) élevée qu'en cas de vitesse lente.

4. Procédé selon au moins l'une quelconque des revendications 1 à 3, **caractérisé en ce que** l'entraînement de roue (7) se produit par le biais d'un entraînement de roue électrique et que l'entraînement de direction (8) se produit par le biais d'un entraînement de roue électrique.

5. Procédé selon au moins l'une quelconque des revendications 1 à 4, **caractérisé en ce que** l'envoi de différents signaux de commande à l'entraînement de roue (7) électrique permet de déplacer le véhicule automobile (1) vers l'avant et vers l'arrière.

6. Procédé selon au moins l'une quelconque des revendications 1 à 5, **caractérisé en ce que** le démarrage de l'entraînement des roues (2) du véhicule automobile (1) se produit par desserrage d'un frein du véhicule automobile (1) et/ou par actionnement de la pédale d'accélération du véhicule automobile (1).

7. Système de stationnement pour un véhicule automobile (1) équipé de roues (2) entraînées, comportant un système de mesure de place de stationnement (4, 5), un appareil de commande (6) permettant de calculer une trajectoire (3) sur la base des données calculées du système de mesure de place de stationnement (4), un entraînement de roue (7) électrique permettant un mouvement vers l'avant et vers l'arrière des roues (2) entraînées, ainsi qu'un entraînement de direction (8) électrique permettant de régler l'angle de direction (β) des roues (2) entraînées, **caractérisé en ce que** l'appareil de commande (6) est réalisé pour commander simultanément l'entraînement de roue (7) électrique et l'entraînement de direction (8) électrique, de sorte qu'un braquage des roues (2) entraînées se produit toujours en présence d'un mouvement de rotation des roues (2) entraînées.

8. Système de stationnement selon la revendication 7, **caractérisé en ce qu'**il comporte ce moyen de mise en oeuvre du procédé de stationnement d'un véhicule automobile (1) selon au moins l'une quelconque des revendications 1 à 6.

9. Système de stationnement selon les revendications 7 ou 8, **caractérisé en ce que** le système de mesure de place de stationnement (4) comporte un système d'analyse sensorielle (5) permettant de détecter des obstacles.
